(19) Europäisches Patentamt
European Patent Office
Office européen des brevets

(11) EP 4 443 589 B1

(12) **EUROPEAN PATENT SPECIFICATION**

(45) Date of publication and mention of the grant of the patent:
**22.04.2026 Bulletin 2026/17**

(21) Application number: **24735135.6**

(22) Date of filing: **24.01.2024**

(51) International Patent Classification (IPC):
***H01M 10/0567*** *(2010.01)* ***H01M 10/052*** *(2010.01)*
***H01M 10/0525*** *(2010.01)* ***H01M 10/0569*** *(2010.01)*

(52) Cooperative Patent Classification (CPC):
**H01M 10/052; H01M 10/0525; H01M 10/0567; H01M 10/0569;** H01M 2300/0034; Y02E 60/10

(86) International application number:
**PCT/JP2024/002058**

(87) International publication number:
**WO 2024/158010 (02.08.2024 Gazette 2024/31)**

(54) **ELECTROLYTE, AND ELECTROCHEMICAL DEVICE AND SECONDARY BATTERY WHICH USE SAME**

ELEKTROLYT UND ELEKTROCHEMISCHE VORRICHTUNG SOWIE SEKUNDÄRBATTERIE DAMIT

SOLUTION ÉLECTROLYTIQUE, ET DISPOSITIF ÉLECTROCHIMIQUE AINSI QUE BATTERIE SECONDAIRE METTANT EN UVRE CELLE-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.01.2023 JP 2023009154**

(43) Date of publication of application:
**09.10.2024 Bulletin 2024/41**

(73) Proprietor: **DAIKIN INDUSTRIES, LTD.**
**Osaka-shi, Osaka 530-0001 (JP)**

(72) Inventors:
- **HIDAKA, Tomoya**
  **Osaka-shi, Osaka 5300001 (JP)**
- **SHIMOOKA, Toshiharu**
  **Osaka-shi, Osaka 5300001 (JP)**
- **KOBAYASHI, Nao**
  **Osaka-shi, Osaka 5300001 (JP)**
- **YAMAZAKI, Shigeaki**
  **Osaka-shi, Osaka 5300001 (JP)**

(74) Representative: **Hoffmann Eitle**
**Patent- und Rechtsanwälte PartmbB**
**Arabellastraße 30**
**81925 München (DE)**

(56) References cited:
**CN-A- 111 384 443**
**CN-A- 112 510 256**
**JP-A- 2022 122 846**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 443 589 B1

## Description

### Technical Field

The present invention relates to electrolytic solutions, and electrochemical devices and secondary batteries using the same.

### Background Art

With weight reduction and miniaturization of electrical products in recent years, demands for electrochemical devices such as secondary batteries have rapidly increased. Further, the electrical products have been upgraded to have unprecedented functions imparted thereto, and thus, there is a growing need for electrochemical devices that may withstand use under harsh conditions for a longer period of time.

It has been proposed to obtain, by incorporating a specific additive, an electrolytic solution that has a high capacity retention, suppresses elution from a positive electrode and makes a gas unlikely to be generated even when electrochemical devices such as lithium ion secondary batteries are stored at a high temperature (WO 2019/003780).

CN-A-112 510 256 discloses a lithium ion battery electrolyte, comprising (i) lithium salt, (ii) non-aqueous solvent and (iii) an additive comprising vinyl sulfate and first class additive selected from isocyanate compound containing 1-3 -N=C=O groups.

CN-A-111 384 443 describes a battery electrolyte additive of the formula $R^1$-$CF_2$-$CR^2R^3$-O-Li (I), wherein $R^1$-$R^3$ each independently are H, F, $C_{1-20}$-alkyl or $C_{1-20}$-haloalkyl.

### Summary of Invention

### Technical Problem

The present invention aims to provide an electrolytic solution that enables improvement in durability of an electrochemical device, reduction of a resistance increase ratio thereof, and reduction of the amount of metal precipitated therein, and an electrochemical device and a secondary battery using the electrolytic solution.

### Solution to Problem

The present invention provides an electrolytic solution (also referred to as "the present electrolytic solution" herein) comprising at least one compound of the formula $Rf^1OLi$ (1) wherein $Rf^1$ is any of $CF_2HCF_2CH_2$-, $CF_3CHFCF_2$- and $CF_3CF_2CH_2$-.

The present invention also relates to an electrochemical device comprising the present electrolytic solution.

The present invention also relates to a secondary battery comprising the present electrolytic solution.

Preferred embodiments of the invention are as defined in the appended dependent claims and/or in the following detailed description.

### Advantageous Effects of Invention

The present invention can provide an electrolytic solution that enables improvement in durability of an electrochemical device, reduction of the resistance increase ratio, and reduction of the amount of metal precipitated therein. An electrochemical device and a secondary battery each of which uses the present electrolytic solution will be improved in durability and will be reduced in the resistance increase ratio.

### Description of Embodiments

Hereinafter, the present disclosure will be described in detail.

The present electrolytic solution contains at least one compound of the formula $Rf^1OLi$ (1) wherein $Rf^1$ is any of $CF_2HCF_2CH_2$-, $CF_3CHFCF_2$- and $CF_3CF_2CH_2$-.

In the present invention, incorporation of the specific alkali metal fluorinated alkoxide mentioned above in an electrolytic solution for an electrochemical device can improve durability of the electrochemical device, namely cycle characteristics (such as capacity retention after cycle), and can reduce the resistance increase ratio and can reduce the amount of metal precipitated of the electrochemical device.

(Lithium fluorinated alkoxide)

The present electrolytic solution contains a compound of the formula $Rf^1OLi$ (1) wherein $Rf^1$ is any of $CF_2HCF_2CH_2$-, $CF_3CHFCF_2$- and $CF_3CF_2CH_2$-.
The compound of formula (1) is preferably $CF_2HCF_2CH_2OLi$ in respect of suppression of a resistance increase ratio.
The content of the compound of formula (1) is preferably 0.0001-500 ppm with respect to the whole electrolytic solution. When having a content in this range, the electrolytic solution becomes particularly excellent in the suppression of a resistance increase ratio.
The lower limit of the content of the compound of formula (1) is more preferably 0.01 ppm, further preferably 0.1 ppm, particularly preferably 1 ppm, and the upper limit of the content thereof is more preferably 400 ppm, further preferably 300 ppm, particularly preferably 100 ppm.
The compound of formula (1) may be produced by a known method. For example, the compound is obtained by causing a fluorinated alcohol ($Rf^1OH$) and Li to react with each other in the presence of a catalyst.

(Fluorinated ether)

The present electrolytic solution preferably further contains a compound of the formula $Rf^2ORf^3$ (2) (sometimes also referred to as a fluorinated ether (2) hereinafter), wherein $Rf^2$ and $Rf^3$ each independently are $C_{1-8}$-fluoroalkyl.
When the fluorinated ether (2) is contained, the flame retardancy of the electrolytic solution is improved, and additionally, the stability and safety thereof at a high temperature and at a high voltage are improved. Further, improvement in durability of an electrochemical device, reduction of a resistance increase ratio thereof, and reduction of the amount of metal precipitated therein are made more possible.
The fluoroalkyl group is $C_{1-8}$-fluoroalkyl, preferably $C_{1-4}$-fluoroalkyl. In particular, more preferred is $C_{2-3}$-fluoroalkyl.
If the number of carbon atoms of the fluorinated alkyl group is excessively small, the boiling point tends to lower, and if the number of carbon atoms thereof is excessively large, the solubility of an electrolyte salt may decrease, the miscibility with other solvent may begin to be adversely affected, and the rate characteristics tend to deteriorate due to increase in the viscosity. A case where $Rf^2$ has 3 or 4 carbon atoms and $Rf^3$ has 2 or 3 carbon atoms is advantageous, in view of an excellent boiling point and excellent rate characteristics.
The fluorinated ether (2) preferably has a fluorine content of 40-75 mass%. When having a fluorine content in this range, the fluorinated ether (2) has a particularly excellent balance between non-flammability and miscibility. Having the above range is also preferred in view of favorable oxidation resistance and safety.
The lower limit of the fluorine content is more preferably 45 mass%, further preferably 50 mass%, particularly preferably 55 mass%. The upper limit is more preferably 70 mass%, further preferably 66 mass%.
The fluorine content in the fluorinated ether (2) is a value calculated based on the structural formula of the fluorinated ether (2) by [(Number of fluorine atoms $\times$ 19)/Molecular weight of fluorinated ether (2)] $\times$ 100 (%).
Examples of $Rf^2$ include $CF_3CF_2CH_2$-, $CF_3CFHCF_2$-, $HCF_2CF_2CF_2$-, $HCF_2CF_2CH_2$-, $CF_3CF_2CH_2CH_2$-, $CF_3CFHCF_2CH_2$-, $HCF_2CF_2CF_2CF_2$-, $HCF_2CF_2CF_2CH_2$-, $HCF_2CF_2CH_2CH_2$-, and $HCF_2CF(CF_3)CH_2$-. Examples of $Rf^3$ include $-CH_2CF_2CF_3$, - $CF_2CFHCF_3$, $-CF_2CF_2CF_2H$, $-CH_2CF_2CF_2H$, $-CH_2CH_2CF_2CF_3$, - $CH_2CF_2CFHCF_3$, $-CF_2CF_2CF_2CF_2H$, $-CH_2CF_2CF_2CF_2H$, $-CH_2CH_2CF_2CF_2H$, $-CH_2CF(CF_3)CF_2H$, $-CF_2CF_2H$, $-CH_2CF_2H$, $-CH_2CF_3$, and $-CF_2CH_3$.
Specific examples of the fluorinated ether (2) include $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $C_6F_{13}OCH_3$, $C_6F_{13}OC_2H_5$, $C_8H_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_2CF_2OCH_2CH(CH_3)_2$.
The fluorinated ether (2) is particularly preferably at least one selected from $CF_2HCF_2CH_2OCF_2CF_2H$, $HCF_2CF_2CH_2OCF_2CFHCF_3$, and $CF_3CF_2CH_2OCF_2CF_2H$ because of being advantageous in view of flame retardancy.
Among these, $CF_2HCF_2CH_2OCF_2CF_2H$ is more preferred.
The content of the fluorinated ether (2) is preferably 0.01-80 mass% with respect to the whole electrolytic solution. With a content in this range, the electrolytic solution can be favorably used. In other words, if the content is increased, the amount of metal precipitated, the metal being derived from an active material, is reduced, but the viscosity of the electrolytic solution increases and the ion conductivity decreases, and hence, the battery life tends to decrease.
The lower limit thereof is preferably 0.1 mass%, further preferably 1 mass%. The upper limit thereof is preferably 75 mass%, further preferably 50 mass%.
The content of the compound of formula (1) is preferably 0.00000001-11 mass% with respect to the compound of formula (2).
The lower limit thereof is preferably 0.000025 mass%, more preferably 0.01 mass%, particularly preferably 0.02

mass%. The upper limit thereof is preferably 10 mass%, more preferably 1 mass%, further preferably 0.5 mass%, particularly preferably 0.35 mass%.

The present electrolytic solution preferably contains a solvent.

The solvent preferably contains at least one selected from a carbonate and a carboxylate.

The carbonate may be a cyclic carbonate or a chain carbonate.

The cyclic carbonate may be a non-fluorinated cyclic carbonate or a fluorinated cyclic carbonate.

An example of the non-fluorinated cyclic carbonate includes a non-fluorinated saturated cyclic carbonate. Preferred is a non-fluorinated saturated alkylene carbonate having a $C_{2-6}$-alkylene group, more preferably a $C_{2-4}$-alkylene group.

Of these, in respect of high permittivity and a suitable viscosity, the non-fluorinated saturated cyclic carbonate is preferably at least one selected from ethylene carbonate, propylene carbonate, cis-2,3-pentylene carbonate, cis-2,3-butylene carbonate, 2,3-pentylene carbonate, 2,3-butylene carbonate, 1,2-pentylene carbonate, 1,2-butylene carbonate, and butylene carbonate.

One of the non-fluorinated saturated cyclic carbonates may be used singly, or two or more thereof may be used in any combination at any ratio.

When the non-fluorinated saturated cyclic carbonate is contained, its content is preferably 5-90 vol.%, more preferably 10-60 vol.%, further preferably 15-50 vol.%, with respect to the solvent.

The fluorinated cyclic carbonate is a cyclic carbonate having a fluorine atom. A solvent containing a fluorinated cyclic carbonate can be suitably used also at a high voltage.

The term "high voltage" herein means a voltage of 4.2 V or more. The upper limit of the "high voltage" is preferably 4.9 V.

The fluorinated cyclic carbonate may be a fluorinated saturated cyclic carbonate or a fluorinated unsaturated cyclic carbonate.

The fluorinated saturated cyclic carbonate is a saturated cyclic carbonate having a fluorine atom. Specific examples thereof include a compound of formula (A) :

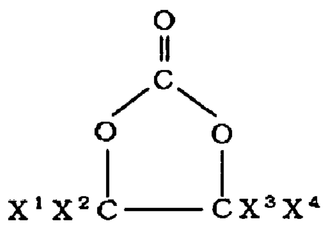
(A)

wherein $X^1$-$X^4$ each independently are -H, $-CH_3$, $-C_2H_5$, -F, fluoroalkyl optionally having an ether bond, or fluoroalkoxy optionally having an ether bond; provided that at least one of $X^1$-$X^4$ is -F, fluoroalkyl optionally having an ether bond, or fluoroalkoxy optionally having an ether bond. Examples of the fluoroalkyl group include $-CF_3$, $-CF_2H$, and $-CH_2F$.

In the case where the present electrolytic solution, when containing the fluorinated saturated cyclic carbonate, is applied to e.g. a high-voltage lithium ion secondary battery, the oxidation resistance of the electrolytic solution can be improved, and stable and excellent charge and discharge characteristics can be provided.

The term "ether bond" herein means a bond represented by -O-.

In respect of favorable permittivity and oxidation resistance, one or two of $X^1$-$X^4$ is/are each preferably - F, fluoroalkyl optionally having an ether bond, or fluoroalkoxy optionally having an ether bond.

In anticipation of decrease in a viscosity at low temperature, increase in the flash point, and improvement in the solubility of an electrolyte salt, $X^1$-$X^4$ are each preferably -H, -F, fluoroalkyl (a), fluoroalkyl having an ether bond (b), or fluoroalkoxy (c).

The fluoroalkyl (a) is a group obtainable by replacing at least one hydrogen atom of an alkyl group by F. The fluoroalkyl (a) has preferably 1-20 carbon atoms, more preferably 1-17 carbon atoms, further preferably 1-7 carbon atoms, particularly preferably 1-5 carbon atoms.

An excessively large number of carbon atoms may lead to deterioration of the low-temperature characteristics and decrease in the solubility of an electrolyte salt. An excessively small number carbon atoms may lead to decrease in the solubility of an electrolyte salt, decrease in the discharge efficiency, and further increase in the viscosity.

Examples of the fluoroalkyl (a) having 1 carbon atom include $CFH_2$-, $CF_2H$-, and $CF_3$-. In respect of high-temperature storage characteristics, particularly preferred is $CF_2H$- or $CF_3$-, and most preferred is $CF_3$-.

The fluoroalkyl (a), the fluoroalkyl having an ether bond (b), and the fluoroalkoxy (c) in the fluorinated saturated cyclic carbonate each preferably have a fluorine content of 10 mass% or more. An excessively low fluorine content may not

sufficiently achieve an effect of reducing the viscosity at low temperature and an effect of increasing the flash point. From this viewpoint, the fluorine content is more preferably 12 mass% or more, further preferably 15 mass% or more. The upper limit thereof is usually 76 mass%.

The fluorine content of each of the fluoroalkyl (a), the fluoroalkyl having an ether bond (b), and the fluoroalkoxy (c) is a value calculated based on each structural formula thereof by:

[(Number of fluorine atoms $\times$ 19)/(Formula weight of each group)] $\times$ 100 (%).

In view of favorable permittivity and oxidation resistance, the fluorine content in the total fluorinated saturated cyclic carbonate is preferably 10 mass% or more, more preferably 15 mass% or more. The upper limit thereof is usually 76 mass%.

The fluorine content in the fluorinated saturated cyclic carbonate is a value calculated based on the structural formula of the fluorinated saturated cyclic carbonate by [(Number of fluorine atoms $\times$ 19)/Molecular weight of fluorinated saturated cyclic carbonate] $\times$ 100 (%).

Specific examples of the fluorinated saturated cyclic carbonate include the following.

Specific examples of the fluorinated saturated cyclic carbonate in which at least one of $X^1$-$X^4$ is -F include:

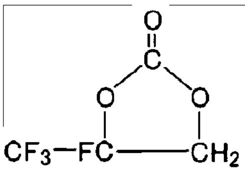
,
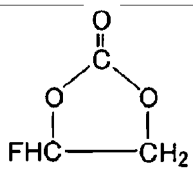
,
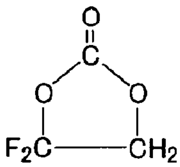
,
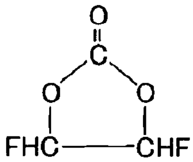
,

These compounds have a high withstand voltage and also give favorable solubility of an electrolyte salt.

Among these, the fluorinated saturated cyclic carbonate is preferably any of the following compounds.

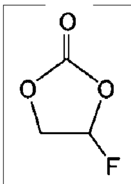
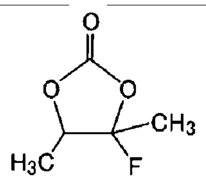
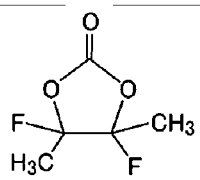
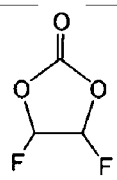
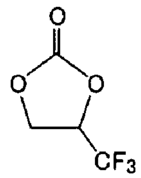
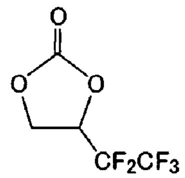
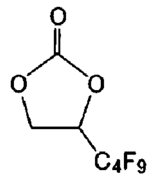
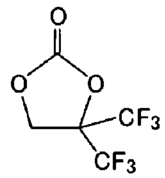
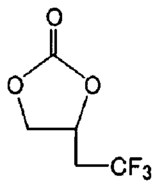
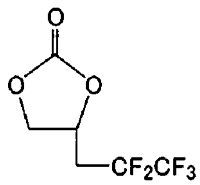
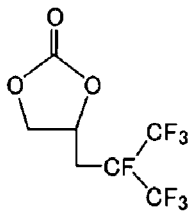
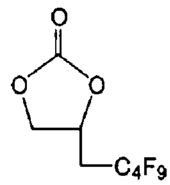
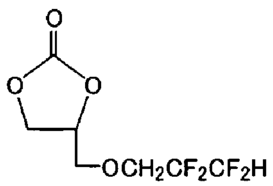
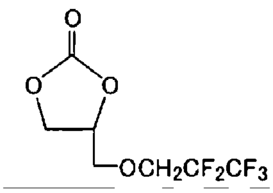
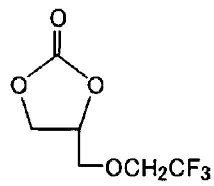
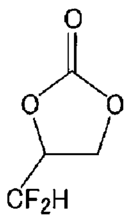
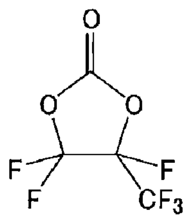
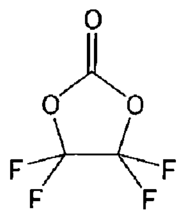
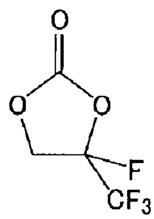
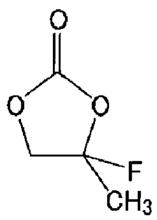
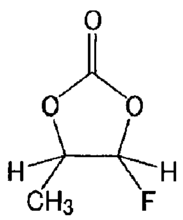
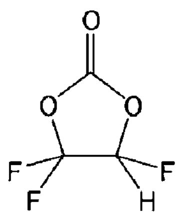
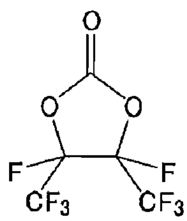
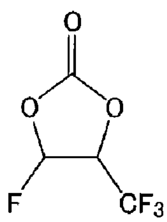

More preferred among these as the fluorinated saturated cyclic carbonate are fluoroethylene carbonate,

difluoroethylene carbonate, trifluoromethylethylene carbonate (3,3,3-trifluoropropylene carbonate), and 2,2,3,3,3-pentafluoropropylethylene carbonate.

One of the fluorinated cyclic carbonates may be used singly, or two or more thereof may be used in any combination at any ratio.

When the fluorinated cyclic carbonate is contained, its content is preferably 5-90 vol.%, more preferably 10-60 vol.%, further preferably 15-45 vol.%, with respect to the solvent.

The chain carbonate may be a non-fluorinated chain carbonate or a fluorinated chain carbonate.

Examples of the non-fluorinated chain carbonate include hydrocarbon-based chain carbonates such as $CH_3OCOOCH_3$ (dimethyl carbonate, DMC), $CH_3CH_2OCOOCH_2CH_3$ (diethyl carbonate, DEC), $CH_3CH_2OCOOCH_3$ (ethyl methyl carbonate, EMC), $CH_3OCOOCH_2CH_2CH_3$ (methyl propyl carbonate), methyl butyl carbonate, ethyl propyl carbonate, ethyl butyl carbonate, dipropyl carbonate, dibutyl carbonate, methyl isopropyl carbonate, methyl-2-phenyl phenyl carbonate, phenyl-2-phenyl phenyl carbonate, trans-2,3-pentylene carbonate, trans-2,3-butylene carbonate, and ethyl phenyl carbonate. Preferred among these is at least one selected from ethyl methyl carbonate, diethyl carbonate, and dimethyl carbonate.

One of the non-fluorinated chain carbonates may be used singly, or two or more thereof may be used in any combination at any ratio.

When the non-fluorinated chain carbonate is contained, its content is preferably 10-90 vol.%, more preferably 20-85 vol.%, further preferably 30-80 vol.%, with respect to the solvent.

The carboxylate may be a cyclic carboxylate or a chain carboxylate.

The cyclic carboxylate may be a non-fluorinated cyclic carboxylate or a fluorinated cyclic carboxylate.

An example of the non-fluorinated cyclic carboxylate includes a non-fluorinated saturated cyclic carboxylate. Preferred is a non-fluorinated saturated cyclic carboxylate having a $C_{2-4}$-alkylene group.

Specific examples of the non-fluorinated saturated cyclic carboxylate having a $C_{2-4}$-alkylene group include $\beta$-propiolactone, $\gamma$-butyrolactone, $\varepsilon$-caprolactone, $\delta$-valerolactone, and $\alpha$-methyl-$\gamma$-butyrolactone. Among these, $\gamma$-butyrolactone and $\delta$-valerolactone are particularly preferred, in view of improvement of the degree of dissociation of lithium ions and improvement of the load characteristics.

One of the non-fluorinated saturated cyclic carboxylates may be used singly, or two or more thereof may be used in any combination at any ratio.

When the non-fluorinated saturated cyclic carboxylate is contained, its content is preferably 0-90 vol.%, more preferably 0.001-90 vol.%, further preferably 1-60 vol.%, particularly preferably 5-40 vol.%, with respect to the solvent.

The chain carboxylate may be a non-fluorinated chain carboxylate or a fluorinated chain carboxylate. When the solvent contains the chain carboxylate, the increase in resistance after high temperature storage of electrolytic solution containing them can be further suppressed.

The above solvent preferably contains at least one selected from the above cyclic carbonate, the above chain carbonate, and the above chain carboxylate. The above cyclic carbonate is preferably a saturated cyclic carbonate.

An electrolytic solution containing a solvent of the compositional feature enables an electrochemical device to have further improved high-temperature storage characteristics and cycle characteristics.

When the above solvent contains the above cyclic carbonate and at least one selected from the above chain carbonate and the above chain carboxylate, the solvent contains the above cyclic carbonate and at least one selected from the above chain carbonate and the above chain carboxylate in a total amount of preferably 10-100 vol.%, more preferably 30-100 vol.%, further preferably 50-100 vol.%.

When the above solvent contains the above cyclic carbonate and at least one selected from the above chain carbonate and the above chain carboxylate, the volume ratio of the cyclic carbonate to at least one selected from the chain carbonate and the chain carboxylate is preferably (5/95)-(95/5), more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the above non-fluorinated saturated cyclic carbonate, the above non-fluorinated chain carbonate, and the above non-fluorinated chain carboxylate. An electrolytic solution containing a solvent having the above compositional feature can be suitably used for electrochemical devices used at a relatively low voltage.

When the above solvent contains the above non-fluorinated saturated cyclic carbonate and at least one selected from the above non-fluorinated chain carbonate and the above non-fluorinated chain carboxylate, the solvent contains the non-fluorinated saturated cyclic carbonate and at least one selected from the non-fluorinated chain carbonate and the non-fluorinated chain carboxylate in a total amount of preferably 5-100 vol.%, more preferably 20-100 vol.%, further preferably 30-100 vol.%.

When the electrolytic solution contains the above non-fluorinated saturated cyclic carbonate and at least one selected from the above non-fluorinated chain carbonate and the above non-fluorinated chain carboxylate, the volume ratio of the non-fluorinated saturated cyclic carbonate to at least one selected from the non-fluorinated chain carbonate

and the non-fluorinated chain carboxylate is preferably (5/95)-(95/5), more preferably 10/90 or more, further preferably 15/85 or more, particularly preferably 20/80 or more, and more preferably 90/10 or less, further preferably 60/40 or less, particularly preferably 50/50 or less.

The above solvent also preferably contains at least one selected from the above fluorinated saturated cyclic carbonate, the above fluorinated chain carbonate, and the above fluorinated chain carboxylate. An electrolytic solution containing a solvent of the compositional feature can be suitably used not only for electrochemical devices used at a relatively low voltage but also for electrochemical devices used at a relatively high voltage.

The solvent is preferably a non-aqueous solvent, and the electrolytic solution of the present disclosure is preferably a non-aqueous electrolytic solution.

The content of the solvent is preferably 70-99.999 mass%, more preferably 80 mass% or more, more preferably 92 mass% or less in electrolytic solution.

The present electrolytic solution preferably further contains an electrolyte salt (provided that the compound (5) is excluded). Examples of the electrolyte salt that can be employed include an alkali metal salt, an ammonium salt, a metal salt other than alkali metal salts (such as a light metal salt other than alkali metal salts), any of those that can be used for an electrolytic solution, such as a liquid salt (ionic liquid), an inorganic polymer salt, and an organic polymer salt.

Examples of the electrolyte salt for an electrolytic solution for an electrochemical device include the following compounds: $MPF_6$, $MBF_4$, $MClO_4$, $MAsF_6$, $MB(C_6H_5)_4$, $MCH_3SO_3$, $MCF_3SO_3$, $MAlCl_4$, $M_2SiF_6$, MCl, and MBr, wherein M is at least one metal selected from Li, Na, and K, preferably a metal selected from of Li, Na, and K, more preferably Li or Na. Use of these alkali metal salts enables excellent battery capacity, cycle characteristics, storage characteristics, and the like to be provided. Among these, at least one selected from $MPF_6$, $MBF_4$, $MClO_4$, and $MAsF_6$ is preferred, and $MPF_6$ is more preferred. Use of these alkali metal salts leads to further decrease in the internal resistance and enables a higher effect to be provided.

The electrolyte salt for an electrolytic solution for a lithium ion secondary battery is preferably a lithium salt.

Any lithium salt may be used, and specific examples thereof include the following: inorganic lithium salts such as $LiPF_6$, $LiBF_4$, $LiClO_4$, $LiAlF_4$, $LiSbF_6$, $LiTaF_6$, $LiWF_7$, $LiAsF_6$, $LiAlCl_4$, LiI, LiBr, LiCl, $LiB_{10}Cl_{10}$, $Li_2SiF_6$, $Li_2PFO_3$, and $LiPO_2F_2$;

lithium tungstates such as $LiWOF_5$;

lithium carboxylates such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$;

lithium salts having a S=O group such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, $CF_3CF_2CF_2CF_2SO_3Li$, lithium methylsulfate, lithium ethylsulfate ($C_2H_5OSO_3Li$), and lithium 2,2,2-trifluoroethylsulfate;

lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium bisperfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, $LiN(CF_3SO_2)(FSO_2)$, $LiN(CF_3SO_2)(C_3F_7SO_2)$, $LiN(CF_3SO_2)(C_4F_9SO_2)$, and $LiN(POF_2)_2$;

lithium sulfamates such as $(CF_3CH_2)_2NSO_3Li$, $(CF_3CH_2)(CH_3)NSO_3Li$, and $(CNCH_2)_2NSO_3Li$;

lithium methide salts such as $LiC(FSO_2)_3$, $LiC(CF_3SO_2)_3$, and $LiC(C_2F_5SO_2)_3$; and

fluorine-containing organic lithium salts such as salts represented by the formula: $LiPF_a(C_nF_{2n+1})_{6-a}$, wherein a is an integer of 0-5, and n is an integer of 1-6, (such as $LiPF_3(C_2F_5)_3$, $LiPF_3(CF_3)_3$, $LiPF_3(iso\text{-}C_3F_7)_3$, $LiPF_5(iso\text{-}C_3F_7)$, $LiPF_4(CF_3)_2$, $LiPF_4(C_2F_5)_2$), $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$, and LiSCN, $LiB(CN)_4$, $LiB(C_6H_5)_4$, $Li_2(C_2O_4)$, $LiP(C_2O_4)_3$, $Li_2B_{12}F_bH_{12-b}$, wherein b is an integer of 0-3.

In view of having an effect of improving properties such as output characteristics, high-rate charge and discharge characteristics, high-temperature storage characteristics, and cycle characteristics, particularly preferred among these are $LiPF_6$, $LiBF_4$, $LiSbF_6$, $LiTaF_6$, $LiPO_2F_2$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$, and most preferred is at least one lithium salt selected from $LiPF_6$, $LiN(FSO_2)_2$, and $LiBF_4$.

These electrolyte salts may be used singly or in combinations of two or more thereof. Preferred examples for combination use of two or more thereof include a combination of $LiPF_6$ and $LiBF_4$ and a combination of $LiPF_6$ and $LiPO_2F_2$, $C_2H_5OSO_3Li$, or $FSO_3Li$. These combinations have an effect of improving the high-temperature storage characteristics, load characteristics, and cycle characteristics.

In this case, the amount of $LiBF_4$, $LiPO_2F_2$, $C_2H_5OSO_3Li$, or $FSO_3Li$ to be blended based on 100 mass% of the total electrolytic solution is not limited and optional as long as the effects of the present disclosure are not significantly

impaired. The amount thereof is usually 0.01 mass% or more, preferably 0.1 mass% or more, while usually 30 mass% or less, preferably 20 mass% or less, more preferably 10 mass% or less, further preferably 5 mass% or less, with respect to the present electrolytic solution.

In another example, an inorganic lithium salt and an organic lithium salt are used in combination. Such a combination has an effect of suppressing deterioration due to high-temperature storage. The organic lithium salt is preferably e.g. $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, or $LiPF_3(C_2F_5)_3$. In this case, the proportion of the organic lithium salt is preferably 0.1 mass% or more, particularly preferably 0.5 mass% or more, while preferably 30 mass% or less, particularly preferably 20 mass% or less, based on 100 mass% of the total electrolytic solution.

The concentration of the electrolyte salt in the electrolytic solution is not limited as long as the effects of the present disclosure is not impaired. In view of making the electric conductivity of the electrolytic solution within a favorable range and ensuring favorable battery performance, the lithium in the electrolytic solution preferably has a total mole concentration of 0.3 mol/L or more, more preferably 0.4 mol/L or more, further preferably 0.5 mol/L or more, while preferably 3 mol/L or less, more preferably 2.5 mol/L or less, further preferably 2.0 mol/L or less.

If the total mole concentration of lithium is excessively low, the electric conductivity of the electrolytic solution may be insufficient. On the other hand, if the total mole concentration thereof is excessively high, the electric conductivity may decrease due to increase in the viscosity, and the battery performance may deteriorate.

The present electrolytic solution may further contain additives, such as a fluorinated saturated cyclic carbonate, an unsaturated cyclic carbonate, an overcharge inhibitor, and other known aids. This can suppress deterioration of the characteristics of an electrochemical device.

The present electrolytic solution may further contain additives such as an ether compound that does not correspond to the fluorinated ether of formula (2), a cyclic carboxylate, a chain carboxylate, a nitrogen-containing compound, a boron-containing compound, an organosilicon-containing compound, a fireproof agent (flame retardant), a surfactant, an additive for increasing the permittivity, an improver for cycle characteristics and rate characteristics, and a sulfone-based compound to the extent that the effects of the present invention are not impaired.

The ether compound is preferably a chain ether having 2-10 carbon atoms and a cyclic ether having 3-6 carbon atoms.

Examples of the chain ether having 2-10 carbon atoms include dimethyl ether, diethyl ether, di-n-butyl ether, dimethoxymethane, methoxyethoxymethane, diethoxymethane, dimethoxyethane, methoxyethoxyethane, diethoxyethane, ethylene glycol di-n-propyl ether, ethylene glycol di-n-butyl ether, diethylene glycol, diethylene glycol dimethyl ether, pentaethylene glycol, triethylene glycol dimethyl ether, triethylene glycol, tetraethylene glycol, tetraethylene glycol dimethyl ether, and diisopropyl ether.

Examples of the cyclic ether having 3-6 carbon atoms include 1,2-dioxane, 1,3-dioxane, 2-methyl-1,3-dioxane, 4-methyl-1,3-dioxane, 1,4-dioxane, metaformaldehyde, 2-methyl-1,3-dioxolane, 1,3-dioxolane, 4-methyl-1,3-dioxolane, 2-(trifluoroethyl)dioxolane, 2,2,-bis(trifluoromethyl)-1,3-dioxolane, and fluorinated compounds thereof. Preferred among these are dimethoxymethane, diethoxymethane, ethoxymethoxymethane, ethylene glycol n-propyl ether, ethylene glycol di-n-butyl ether, diethylene glycol dimethyl ether, and crown ethers, in view of high ability to solvate with lithium ions and improvement in the degree of ion dissociation, particularly preferred are dimethoxymethane, diethoxymethane, and ethoxymethoxymethane because of giving a low viscosity and a high ion conductivity.

The present electrolytic solution preferably contains 5-200 ppm of hydrogen fluoride (HF). Incorporation of HF can promote formation of a film of the additive mentioned above. If the content of HF is excessively small, the ability to form a film on the negative electrode tends to decrease, and the characteristics of an electrochemical device tend to deteriorate. If the content of HF is excessively large, the oxidation resistance of the electrolytic solution tends to decrease due to the influence of HF. The present electrolytic solution, even when containing HF in the content within the above range, causes no reduction in the recovery capacity ratio after high-temperature storage of an electrochemical device.

The content of HF is more preferably 10 ppm or more, further preferably 20 ppm or more, and is more preferably 100 ppm or less, further preferably 80 ppm or less, particularly preferably 50 ppm or less.

The content of HF can be measured by neutralization titration.

The present electrolytic solution is preferably prepared by any method using the components mentioned above.

The present electrolytic solution can be preferably applied to electrochemical devices such as a lithium ion secondary battery, a lithium ion capacitor, a hybrid capacitor, and an electric double layer capacitor. An electrochemical device including the present electrolytic solution is also one of aspects of the present invention.

(Electrochemical Device)

The above electrochemical device is not limited, and can be applied to an electrochemical device conventionally known. Specific examples thereof include secondary batteries such as a lithium ion battery, primary batteries such as a

lithium battery, a magnesium ion battery, a radical battery, a solar cell (particularly a dye-sensitized solar cell), a fuel cell;

capacitors such as a lithium ion capacitor, a hybrid capacitor, an electrochemical capacitor, and an electric double layer capacitor;
various capacitors such as an aluminum electrolytic capacitor and a tantalum electrolytic capacitor;
an electronic device, an electrochemical switching device, and various electrochemical sensors.

Among these, because of high capacity and large output, the electrochemical device can also be preferably used as a secondary battery that causes a large volume change due to transfer of a large amount of metal ions.
The secondary battery can have a known structure, and typically includes a positive electrode and a negative electrode, which can occlude and release ions (such as lithium ions), and the present electrolytic solution. A secondary battery including the present electrolytic solution is also one of aspects of the present invention.
Hereinafter, the secondary battery including the present electrolytic solution will be described.
The present invention also relates to a lithium ion secondary battery including the present electrolytic solution. The secondary battery preferably includes a positive electrode, a negative electrode, and the electrolytic solution mentioned above. A lithium ion secondary battery including the present electrolytic solution is also one of aspects of the present invention.

<Positive Electrode>

The positive electrode is preferably composed of a positive electrode active material layer containing a positive electrode active material, and a current collector.
The positive electrode active material is not limited as long as the material can electrochemically occlude and release alkali metal ions. A preferred example thereof includes a material containing an alkali metal and at least one transition metal. Specific examples thereof include alkali metal-containing transition metal composite oxides and alkali metal-containing transition metal phosphate compounds. Particularly preferred among these as the positive electrode active material is an alkali metal-containing transition metal composite oxide that generates a high voltage. Examples of the alkali metal ion include a lithium ion, a sodium ion, and a potassium ion. In a preferred embodiment, the alkali metal ion may be a lithium ion. In other words, in the present embodiment, the alkali metal ion secondary battery is a lithium ion secondary battery.
Examples of the alkali metal-containing transition metal composite oxide include

lithium-manganese spinel composite oxides of the formula $MaMn_{2-b}M^1_bO_4$ (3-1), wherein M is at least one metal selected from Li, Na, and K; $0.9 \leq a$; $0 \leq b \leq 1.5$; $M^1$ is at least one metal selected from Fe, Co, Ni, Cu, Zn, Al, Sn, Cr, V, Ti, Mg, Ca, Sr, B, Ga, In, Si, and Ge;
lithium-nickel composite oxides of the formula $MNi_{1-c}M^2_cO_2$ (3-2), wherein M is at least one metal selected from Li, Na, and K; $0 \leq c \leq 0.5$; $M^2$ is at least one metal selected from Fe, Co, Mn, Cu, Zn, Al, Sn, Cr, V, Ti, Mg, Ca, Sr, B, Ga, In, Si, and Ge; and
lithium-cobalt composite oxides of the formula $MCo_{1-d}M^3_dO_2$ (3-3), wherein M is at least one metal selected from, Li, Na, and K; $0 \leq d \leq 0.5$; $M^3$ is at least one metal selected from Fe, Ni, Mn, Cu, Zn, Al, Sn, Cr, V, Ti, Mg, Ca, Sr, B, Ga, In, Si, and Ge. In the above, M is preferably one metal selected from Li, Na, and K, more preferably Li or Na, further preferably Li.

In view of enabling a high-output secondary battery having a high energy density to be provided, preferred among these is e.g. $MCoO_2$, $MMnO_2$, $MNiO_2$, $MMn_2O_4$, $MNi_{0.8}Co_{0.15}Al_{0.05}O_2$, or $MNi_{1/3}Co_{1/3}Mn_{1/3}O_2$, and a compound of the following formula (3-4) is preferred:

$$MNi_hCo_iMn_jM^5_kO_2 \qquad (3\text{-}4)$$

wherein M is at least one metal selected from Li, Na, and K, $M^5$ represents at least one selected from Fe, Cu, Zn, Al, Sn, Cr, V, Ti, Mg, Ca, Sr, B, Ga, In, Si, and Ge, $(h + i + j + k) = 1.0$, $0 \leq h \leq 1.0$, $0 \leq i \leq 1.0$, $0 \leq j \leq 1.5$, $0 \leq k \leq 0.2$.
Examples of the material of the current collector for a positive electrode include metal materials including metals such as aluminum, titanium, tantalum, stainless steel, and nickel, and alloys thereof; and carbon materials such as carbon cloth and carbon paper. Preferred among these are metal materials, especially aluminum or an alloy thereof.
The positive electrode may be produced by a usual method. An example of the production method includes a method in which the positive electrode active material is mixed with a binder, a thickening agent, a conductive material, a solvent, and the like to form a slurry-like positive electrode mixture, and then this mixture is applied to a current collector, dried, and pressed so as to enhance the density.

The density can be enhanced with e.g. a manual press or a roll press. The density of the positive electrode active material layer is in the range of preferably 1.5 g/cm$^3$ or more, more preferably 2 g/cm$^3$ or more, further preferably 2.2 g/cm$^3$ or more, while preferably 5 g/cm$^3$ or less, more preferably 4.5 g/cm$^3$ or less, further preferably 4 g/cm$^3$ or less. If the density exceeds this range, the permeability of the electrolytic solution toward the vicinity of the interface between the current collector and the active material decreases, charge and discharge characteristics deteriorate particularly at a high current density, and thus, high output may not be provided. If the density falls below the range, the electrical conductivity between the active materials may decrease, the battery resistance may increase, and thus, high output may not be provided.

<Negative Electrode>

The negative electrode is preferably composed of a negative electrode active material layer, and a current collector.

(Negative Electrode Active Material)

The negative electrode active material is not limited, and examples thereof include any material selected from lithium metal, those containing carbonaceous materials such as artificial graphite, graphite carbon fiber, resin calcined carbon, pyrolytic vapor-grown carbon, coke, meso-carbon microbead (MCMB), furfuryl alcohol resin calcined carbon, polyacene, pitch-based carbon fiber, vapor-grown carbon fiber, natural graphite, and non-graphitizable carbon, silicon-containing compounds such as silicon and silicon alloy, $Li_4Ti_5O_{12}$ and the like, or a mixture of two or more thereof. Among these, those partially containing a carbonaceous material, and silicon-containing compounds can be particularly preferably used.

In respect of the negative electrode active material layer, for example, a binder and a solvent are mixed, then to the resulting mixture are added a negative electrode active material, and they are further mixed, and thus, a slurry-like negative electrode mixture can be prepared. The resulting negative electrode mixture is uniformly applied to the current collector of e.g. metal foil or metal mesh, then dried, and pressed as needed to form a thin negative electrode active material layer on the current collector, as a thin film electrode. Alternatively, the negative electrode mixture may be prepared by mixing e.g. a negative electrode active material and a binder previously and then adding a solvent to the mixture.

Examples of the current collector provided in the present negative electrode include metal foils or metal meshes of iron, stainless steel, copper, aluminum, nickel, and titanium, and carbon materials such as carbon cloth and carbon paper, and preferred among these is copper foil.

The present negative electrode can be preferably produced by a production method in which the present negative electrode mixture is applied to the current collector. After the negative electrode mixture is applied, the coating film may be further dried, and optionally heat-treated, and the resulting dried coating film may be pressed.

In the case of a metal material, the current collector may be in the form of e.g. metal foil, metal cylinder, metal coil, metal plate, expanded metal, punched metal, or metal foam, and in the case of a carbon material, the current collector may be in the form of e.g. carbon plate, carbon thin film, or carbon cylinder. Preferred among these is metal foil. The thin film may be in the form of mesh, as appropriate. The thin film may have any thickness, and the thickness is usually 1 μm or more, preferably 3 μm or more, more preferably 5 μm or more, while usually 1 mm or less, preferably 100 μm or less, more preferably 50 μm or less. If the thin film is thinner than the above range, the strength thereof may become insufficient required for a current collector. In contrast, if the thin film is thicker than this range, the handleability may be impaired.

<Separator>

The present secondary battery preferably further comprises a separator.

The material and shape of the separator is not limited and known one may be used as long as the separator is stable to the electrolytic solution and excellent in a liquid-retaining ability. In particular, it is preferred to use a separator in the form of a porous sheet or a nonwoven fabric for which e.g a resin, a glass fiber, or inorganic matter formed of a material stable to the present electrolytic solution is employed and which has excellent liquid-retaining ability.

Examples of the material of a resin or glass-fiber separator that can be used include polyolefins such as polyethylene and polypropylene, aromatic polyamide, polytetrafluoroethylene, polyether sulfone, and glass filters. One of these materials may be used singly or two or more of these may be used in any combination at any ratio, for example, in the form of a polypropylene/polyethylene bilayer film or a polypropylene/polyethylene/polypropylene trilayer film. Among these, the above separator is preferably a porous sheet or a nonwoven fabric formed from a polyolefin such as polyethylene or polypropylene as the raw material, in view of favorable permeability of the electrolytic solution and a favorable shut-down effect.

The separator may have any thickness, and the thickness is usually 1 μm or more, preferably 5 μm or more,

further preferably 8 μm or more, while usually 50 μm or less, preferably 40 μm or less, further preferably 30 μm or less. If the separator is excessively thinner than the above range, the insulation and mechanical strength may decrease. If the separator is excessively thicker than the above range, not only the battery performance such as rate characteristics may deteriorate but also an energy density of the whole electrolytic solution battery may decrease.

<Battery Design>

The electrode group may have either a laminate structure including the above positive electrode plate and negative electrode plate with the above separator interposed therebetween, or a wound structure including the above positive electrode plate and negative electrode plate wound in a spiral form with the above separator interposed therebetween. The proportion of the volume of the electrode group in the battery internal volume (hereinafter, referred to as an electrode group occupancy) is usually 40% or more, preferably 50% or more, while usually 90% or less, preferably 80% or less.

The material of the external case is not limited as long as the material is stable to an electrolytic solution to be used. Specific examples thereof include metals such as nickel-plated steel plates, stainless steel, aluminum and aluminum alloys, and magnesium alloys, or a layered film (laminate film) of a resin and aluminum foil. From the viewpoint of weight reduction, a metal such as aluminum or an aluminum alloy or a laminate film is suitably used.

The present secondary battery may have any shape, and examples thereof include a cylindrical shape, a square shape, a laminate shape, a coin shape, and a large-size shape. The shapes and the constitutions of the positive electrode, the negative electrode, and the separator may be changed for use in accordance with the shape of each of the battery.

Examples

Next, the present disclosure will be described with reference to Examples.

Unless otherwise specified in the following Examples, "parts" and "%" represent "parts by mass (pbm)" and " mass%", respectively.

Compounds (1-1) to (1-5) used are shown below.

(1-1) $CF_2HCF_2CH_2OLi$

(1-2) $CF_2HCF_2CF_2CF_2CH_2Oli$

(1-3) $CF_2HCF_2Oli$

(1-4) $CF_3CHFCF_2OLi$

(1-5) $CF_3CF_2CH_2OLi$

Compounds (2-1) to (2-3) used are shown below.

(2-1) $CF_2HCF_2CH_2OCF_2CF_2H$

(2-2) $CF_2HCF_2CH_2OCF_2CHFCF_3$

(2-3) $CF_3CF_2CH_2OCF_2CF_2H$

(Example 1)

[Preparation of Electrolytic Solution]

Ethylene carbonate (EC) and ethyl methyl carbonate (EMC) were mixed in a volume ratio of 3/7, and to this mixture was added $LiPF_6$ at a concentration of 1.0 mol/L to thereby prepare a basic electrolytic solution.

To the basic electrolytic solution, 0.001 ppm of the compound (1-1) was added, and they were mixed to thereby prepare a non-aqueous electrolytic solution.

[Production of Positive Electrode]

To 97 pbm of $LiCoO_2$ as a positive electrode active material, 1.5 pbm of acetylene black as a conductive aid and 1.5 pbm of polyvinylidene fluoride (8 mass% NMP solution) as a binder were added, and they were mixed using a disperser to form a slurry. The resulting slurry was applied to 20-μm-thick aluminum foil, dried, then rolled using a press, and cut to provide a piece having a coated area having a width of 50 mm and a length of 30 mm (positive electrode material layer) and an uncoated area having a width of 5 mm and a length of 9 mm, as a positive electrode.

[Production of Negative Electrode]

94 mass% of a silicon oxide powder (SiO) and graphite (ratio by mass 10/90) as negative electrode active materials and 6 mass% of polyvinylidene fluoride (PVdF) as a binder were mixed, thereto was further added N-methyl-2-pyrrolidone (NMP), and they were mixed to form a slurry. The resulting slurry was applied to a negative electrode current collector composed of 15-μm-thick copper foil, and dried. This was cut to provide a piece with a predetermined electrode size, and the piece was rolled using a roll press to thereby produce a negative electrode having a negative electrode material layer formed on the negative electrode current collector.

[Production of Battery]

The produced negative electrode having a negative electrode material layer on one surface was cut to provide a piece having a coated area having a width of 52 mm and a length of 32 mm (negative electrode material layer) and an uncoated area having a width of 5 mm and a length of 9 mm, as a negative electrode.
The positive electrode was faced to the negative electrode with a microporous polyethylene film (separator) having a thickness of 20 μm interposed therebetween, then the non-aqueous electrolytic solution provided above was injected therein, the non-aqueous electrolytic solution was made to sufficiently permeate into the separator, thereafter, sealing, preliminary charging, and aging were performed to produce an aluminum laminated cell (lithium ion secondary battery).

(Measurement of Battery Characteristics)

[Cycle Characteristics]

The resulting aluminum laminated cell was subjected to constant-current constant-voltage charging (hereinafter referred to as CC/CV charging) (0.1 C cut) to 4.2 V at a current corresponding to 0.2 C and then discharged to 2.5 V at a constant current of 0.2 C, at 60°C, and taking this as 1 cycle, 3 cycles were performed. Thereafter, the cell was subjected to CC/CV charging (0.1 C cut) to 4.2 V at a current corresponding to 1.0 C and then discharged to 2.5 V at a constant current of 1.0 C, at 45°C, and taking this as 1 cycle, an initial discharge capacity was determined from a discharge capacity. The cycles were performed again, and a discharge capacity after 500 cycles was measured. A ratio of the discharge capacity after 500 cycles to the initial discharge capacity was determined as capacity retention (%).

$$\text{Capacity retention (\%)} = (\text{discharge capacity after 500 cycles}) \div (\text{1.0 C initial discharge capacity}) \times 100$$

The results are shown as relative values when taking the result of Comparative Example 1 as 1.

[Resistance Increase Ratio]

The above battery was charged to SOC50%, then discharged at 1, 3, or 5 C rate, and a voltage drop (V) at that time was measured. Using the value of voltage obtained and the value of current and using the formula V = IR, a resistance value was calculated from a slope. Before and after the cycles, this resistance value was measured, and a resistance increase ratio was calculated from [resistance value after 500 cycles ÷ resistance value before cycles].
Relative values when taking the value of Comparative Example 1 as 1 or the value of Comparative Example 2 as 1 are described in Table 1 or Table 2.
The above SOC indicates a state of charge, and SOC100% means a capacity when a battery is charged to 4.2 V. For example, SOC50% indicates half capacity of SOC100%.

(Measurement of Amount of Metal Precipitated)

[Amount of Co]

After 500 cycles, the aluminum laminated cell was disassembled, and the negative electrode was taken out and immersed in a 5 mass% nitric acid aqueous solution for 24 hours. After 24 hours, filtration was performed, and the filtrate was subjected to the ICP emission spectroscopy to thereby calculate the amount of Co.

(Examples 2-25)

A non-aqueous electrolytic solution was prepared in the same manner as in Example 1 except that the types of the additives for the electrolytic solution and the amounts thereof added were changed as shown in Table 1, and further, a battery was produced and evaluated.
The results are shown in Table 1.

(Comparative Example 1)

A non-aqueous electrolytic solution was prepared in the same manner as in Example 1 except that the additives were not used, and further, a battery was produced and evaluated.
The results are shown in Table 1. Examples 18-21 containing the compound (1) of the above formula (1-2) or (1-3) are not covered by the wording of the present claims.

[Table 1]

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 1 as 1) | Resistance increase ratio (relative value when taking value of Comparative Example 1 as 1) | Amount of Co, ppm |
| Example 1 | 1-1 | 0.001 | - | - | 1.56 | 0.63 | 91 |
| Example 2 | 1-1 | 0.01 | - | - | 1.58 | 0.62 | 91 |
| Example 3 | 1-1 | 0.1 | - | - | 1.60 | 0.61 | 90 |
| Example 4 | 1-1 | 1 | - | - | 1.59 | 0.63 | 91 |
| Example 5 | 1-1 | 10 | - | - | 1.58 | 0.64 | 92 |
| Example 6 | 1-1 | 100 | - | - | 1.57 | 0.65 | 91 |
| Example 7 | 1-1 | 0.001 | 2-1 | 3.00 | 1.59 | 0.61 | 75 |
| Example 8 | 1-1 | 0.01 | 2-1 | 3.00 | 1.61 | 0.60 | 76 |
| Example 9 | 1-1 | 0.1 | 2-1 | 3.00 | 1.63 | 0.59 | 75 |
| Example 10 | 1-1 | 1 | 2-1 | 3.00 | 1.62 | 0.61 | 75 |
| Example 11 | 1-1 | 10 | 2-1 | 3.00 | 1.61 | 0.62 | 76 |
| Example 12 | 1-1 | 100 | 2-1 | 3.00 | 1.60 | 0.63 | 75 |
| Example 13 | 1-1 | 0.1 | 2-1 | 0.1 | 1.60 | 0.63 | 85 |
| Example 14 | 1-1 | 0.1 | 2-1 | 1.0 | 1.61 | 0.63 | 80 |
| Example 15 | 1-1 | 0.1 | 2-1 | 10 | 1.62 | 0.61 | 70 |
| Example 16 | 1-1 | 0.1 | 2-1 | 20 | 1.61 | 0.62 | 60 |
| Example 17 | 1-1 | 0.1 | 2-1 | 40 | 1.59 | 0.63 | 50 |

(continued)

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 1 as 1) | Resistance increase ratio (relative value when taking value of Comparative Example 1 as 1) | Amount of Co, ppm |
| Example 18 | 1-2 | 0.1 | - | - | 1.60 | 0.60 | 90 |
| Example 19 | 1-2 | 0.1 | 2-1 | 3.0 | 1.60 | 0.63 | 75 |
| Example 20 | 1-3 | 0.1 | - | - | 1.59 | 0.60 | 91 |
| Example 21 | 1-3 | 0.1 | 2-1 | 3.0 | 1.62 | 0.58 | 76 |
| Example 22 | 1-4 | 0.1 | - | - | 1.57 | 0.61 | 91 |
| Example 23 | 1-4 | 0.1 | 2-2 | 3.0 | 1.60 | 0.59 | 75 |
| Example 24 | 1-5 | 0.1 | - | - | 1.56 | 0.62 | 92 |
| Example 25 | 1-5 | 0.1 | 2-3 | 3.0 | 1.59 | 0.60 | 75 |
| Comparative Example 1 | - | - | - | - | 1.00 | 1.00 | 150 |

(Examples 26-29)

Ethylene carbonate (EC) and dimethyl carbonate (DMC) were mixed in a volume ratio of 2/98, and to this mixture was added $LiN(FSO_2)_2$ (LiFSI) at a concentration of 1.0 mol/L to thereby prepare a basic electrolytic solution.

A non-aqueous electrolytic solution was prepared in the same manner as in Example 1 except that the types of the additives for the electrolytic solution and the amounts thereof added were changed as shown in Table 2, further, a battery was produced in the same manner as in Example 1 except that $LiNi_{0.6}Mn_{0.2}Co_{0.2}O_2$ (NMC622) was used as the positive electrode active material, and the battery characteristics mentioned above and the amount of metal precipitated mentioned below were evaluated.

The results are shown in Table 2.

(Measurement of Amount of Metal Precipitated)

[Amount of Mn]

After 500 cycles, the aluminum laminated cell was disassembled, and the negative electrode was taken out and immersed in a 5 mass% nitric acid aqueous solution for 24 hours. After 24 hours, filtration was performed, and the filtrate was subjected to the ICP emission spectroscopy to thereby calculate the amount of Mn.

(Comparative Example 2)

A non-aqueous electrolytic solution was prepared in the same manner as in Example 26 except that the additives were not used, and further, a battery was produced and evaluated.

The results are shown in Table 2.

[Table 2]

| | Additive (1) | Concentration (ppm) | Additive (2) | Concentration (mass%) | Battery characteristics | | Amount of metal precipitated |
|---|---|---|---|---|---|---|---|
| | | | | | Cycle characteristics (relative value when taking value of Comparative Example 2 as 1) | Resistance increase ratio (relative value when taking value of Comparative Example 2 as 1) | Amount of Mn, ppm |
| Example 26 | 1-1 | 100 | - | - | 1.62 | 0.61 | 1500 |
| Example 27 | 1-1 | 100 | 2-1 | 20 | 1.61 | 0.62 | 1200 |
| Example 28 | 1-1 | 100 | 2-1 | 40 | 1.60 | 0.63 | 900 |
| Example 29 | 1-1 | 100 | 2-1 | 75 | 1.38 | 0.75 | 421 |
| Comparative Example 2 | - | - | - | - | 1.00 | 1.00 | 2120 |

Examples in Tables 1 and 2 show that use of the electrolytic solution provided in each of Examples improved cycle characteristics of the secondary battery and reduced the resistance increase ratio.

Industrial Applicability

Electrochemical devices including the electrolytic solution of the present disclosure, such as secondary batteries, can be used as various power supply such as a portable power supply and a power source for automobiles.

## Claims

1. An electrolytic solution comprising at least one compound of the formula $Rf^1OLi$ (1) wherein $Rf^1$ is any of $CF_2HCF_2CH_2$-, $CF_3CHFCF_2$- and $CF_3CF_2CH_2$-.

2. The electrolytic solution of claim 1, which contains, based on the whole electrolytic solution, 0.0001-500 ppm of the compound of formula (1).

3. The electrolytic solution of claim 1 or 2, further comprising a compound of the formula $Rf^2ORf^3$ (2), wherein $Rf^2$ and $Rf^3$ each independently are $C_{1-8}$-fluoroalkyl.

4. The electrolytic solution of claim 3, wherein the compound of formula (2) is at least one selected from $CF_2HCF_2CH_2OCF_2CF_2H$, $CF_2HCF_2CH_2OCF_2CHFCF_3$, and $CF_3CF_2CH_2OCF_2CF_2H$.

5. The electrolytic solution of claim 3 or 4, which contains, based on the whole electrolytic solution, 0.01-80 mass% of the compound of formula (2).

6. The electrolytic solution of any of claims 3-5, which contains 0.00000001-11 mass% of the compound of formula (1), based on the compound of formula (2).

7. The electrolytic solution of any of claims 3-6, which contains

   (i) 0.1-75 mass% of the compound of formula (2), based on the whole electrolytic solution, and
   (ii) 0.000025-0.35 mass% of the compound of formula (1), based on the compound of formula (2).

8. The electrolytic solution of any of claims 1-7, wherein the compound of formula (1) is $CF_2HCF_2CH_2OLi$.

9. The electrolytic solution of any of claims 3-8, wherein the compound of formula (2) is $CF_2HCF_2CH_2OCF_2CF_2H$.

10. An electrochemical device comprising the electrolytic solution of any of claims 1-9.

11. A secondary battery comprising the electrolytic solution of any of claims 1-9.

12. The battery of claim 11, which is a lithium ion secondary battery.

**Patentansprüche**

1. Elektrolytlösung, umfassend mindestens eine Verbindung der Formel $Rf^1OLi$ (1), worin $Rf^1$ eines ist aus $CF_2HCF_2CH_2$-, $CF_3CHFCF_2$- und $CF_3CF_2CH_2$-.

2. Elektrolytlösung gemäß Anspruch 1, die, bezogen auf die gesamte Elektrolytlösung, 0,0001-500 ppm der Verbindung der Formel (1) enthält.

3. Elektrolytlösung gemäß Anspruch 1 oder 2, ferner umfassend eine Verbindung der Formel $Rf^2ORf^3$ (2), worin $Rf^2$ und $Rf^3$ jeweils unabhängig $C_{1-8}$-Fluoralkyl sind.

4. Elektrolytlösung gemäß Anspruch 3, wobei die Verbindung der Formel (2) mindestens eine ist, die ausgewählt ist aus $CF_2HCF_2CH_2OCF_2CF_2H$, $CF_2HCF_2CH_2OCF_2CHFCF_3$ und $CF_3CF_2CH_2OCF_2CF_2H$.

5. Elektrolytlösung gemäß Anspruch 3 oder 4, die, bezogen auf die gesamte Elektrolytlösung, 0,01-80 Massen-% der Verbindung der Formel (2) enthält.

6. Elektrolytlösung gemäß mindestens einem der Ansprüche 3-5, die, bezogen auf die Verbindung der Formel (2), 0,00000001-11 Massen-% der Verbindung der Formel (1) enthält.

7. Elektrolytlösung gemäß mindestens einem der Ansprüche 3-6, die

(i) bezogen auf die gesamte Elektrolytlösung, 0,1-75 Massen-% der Verbindung der Formel (2), und
(ii) bezogen auf die Verbindung der Formel (2), 0,000025-0,35 Massen-% der Verbindung der Formel (1), enthält.

8. Elektrolytlösung gemäß mindestens einem der Ansprüche 1-7, wobei die Verbindung der Formel (1) $CF_2HCF_2CH_2O$-Li ist.

9. Elektrolytlösung gemäß mindestens einem der Ansprüche 3-8, wobei die Verbindung der Formel (2) $CF_2HCF_2CH_2OCF_2CF_2H$ ist.

10. Elektrochemische Vorrichtung, umfassend die Elektrolytlösung gemäß mindestens einem der Ansprüche 1-9.

11. Sekundärbatterie, umfassend die Elektrolytlösung gemäß mindestens einem der Ansprüche 1-9.

12. Batterie gemäß Anspruch 11, die eine Lithium-Ionen-Sekundärbatterie ist.

**Revendications**

1. Solution électrolytique comprenant au moins un composé de la formule $Rf^1OLi$ (1) dans laquelle $Rf^1$ est l'un quelconque de $CF_2HCF_2CH_2$-, $CF_3CHFCF_2$- et $CF_3CF_2CH_2$-.

2. Solution électrolytique selon la revendication 1, qui contient, sur la base de la totalité de la solution électrolytique, de 0,0001 à 500 ppm du composé de formule (1).

3. Solution électrolytique selon la revendication 1 ou la revendication 2, comprenant en outre un composé de la formule

$Rf^2ORf^3$ (2), dans laquelle $Rf^2$ et $Rf^3$ sont chacun indépendamment $C_1$-$_8$-fluoroalkyle.

**4.** Solution électrolytique selon la revendication 3, dans laquelle le composé de formule (2) est au moins un sélectionné parmi $CF_2HCF_2CH_2OCF_2CF_2H$, $CF_2HCF_2CH_2OCF_2CHFCF_3$ et $CF_3CF_2CH_2OCF_2CF_2H$.

**5.** Solution électrolytique selon la revendication 3 ou la revendication 4, qui contient, sur la base de la totalité de la solution électrolytique, de 0,01 à 80 % en masse du composé de formule (2).

**6.** Solution électrolytique selon l'une quelconque des revendications 3 à 5, qui contient de 0,00000001 à 11 % en masse du composé de formule (1), sur la base du composé de formule (2).

**7.** Solution électrolytique selon l'une quelconque des revendications 3 à 6, qui contient

(i) de 0,1 à 75 % en masse du composé de formule (2), sur la base de la totalité de la solution électrolytique, et
(ii) de 0,000025 à 0,35 % en masse du composé de formule (1), sur la base du composé de formule (2).

**8.** Solution électrolytique selon l'une quelconque des revendications 1 à 7, dans laquelle le composé de formule (1) est $CF_2HCF_2CH_2OLi$.

**9.** Solution électrolytique selon l'une quelconque des revendications 3 à 8, dans laquelle le composé de formule (2) est $CF_2HCF_2CH_2OCF_2CF_2H$.

**10.** Dispositif électrochimique comprenant la solution électrolytique selon l'une quelconque des revendications 1 à 9.

**11.** Batterie secondaire comprenant la solution électrolytique selon l'une quelconque des revendications 1 à 9.

**12.** Batterie selon la revendication 11, qui est une batterie secondaire au lithium-ion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019003780 A
- CN 112510256 A
- CN 111384443 A